# EUROPEAN PATENT SPECIFICATION

(11) **EP 1 068 265 B1**
(45) Date of publication and mention of the grant of the patent: **31.05.2006**
(21) Application number: 99908624.2
(22) Date of filing: 02.03.1999
(51) Int. Cl.: C08K 13/04, C04B 20/00, C08K 3/00, C08K 3/08, C08K 7/02

(54) **THERMOPLASTIC RESIN COMPOSITION**
THERMOPLASTISCHE HARZZUSAMMENSETZUNG
COMPOSITION DE RESINE THERMOPLASTIQUE

(30) Priority: 24.03.1998 US 47161
(43) Date of publication of application: 17.01.2001
(73) Proprietor: GENERAL ELECTRIC COMPANY, Schenectady, NY 12345 (US)
(72) Inventor: BRASSER, Jacobus, Johannes, Maria, NL-1723 AL Noord-Scharwoude (NL); SPRONK, Johannes, Bernardus, Maria, NL-1713 VD Obdan (NL)
(74) Representative: Szary, Anne Catherine
(86) International application number: PCT/US1999/004554
(87) International publication number: WO 1999/048968

(56) References cited:
- EP-A- 0 516 499
- EP-A- 0 786 440
- US-A- 4 959 401

## Description

### TECHNICAL FIELD

The present invention is directed to a thermoplastic resin composition, more particularly to a thermoplastic resin composition that imparts the appearance of natural stone to articles molded therefrom.

### BACKGROUND

Shaped thermoplastic resin articles having an appearance that closely resembles that of a natural material, such as for example, stone, are desirable, in that the natural appearance tends to connote high value. An appearance that resembles granite is particularly desirable.

Previous attempts to make shaped thermoplastic resin articles that resemble stone have typically involved the addition of appearance modifying additives and have suffered from drawbacks such as the lack of a convincing resemblance to stone, difficulty in processing and the presence of visible "flow lines" and "weld lines", caused by alignment of additive particles during molding.

The composition of the present invention imparts an aesthetically pleasing appearance that strongly resembles natural stone to articles molded therefrom, without suffering the drawback of being difficult to process and without a tendency to form flow lines or weld lines.

### SUMMARY OF THE INVENTION

The present invention is directed to a thermoplastic resin composition that comprises:
(a) a thermoplastic resin, and
(b) up to 30 parts by weight ("pbw") of appearance modifying additives dispersed in the resin, said additives comprising:
   (i) at least 0.05 pbw of metallic particles having an average particle size of from 0.05 to 5 millimeters ("mm");
   (ii) at least 0.05 pbw of fibers having an average diameter of from 0.1 to 10 mm and an average aspect ratio of from 1:2 to 1:10; and
   (iii) at least 0.05 pbw of mineral particles having an average particle size of from 0.1 to 5 mm;
wherein the additives are present in relative amounts selected so that the molding compound imparts the appearance of natural stone to articles molded therefrom.

### DETAILED DESCRIPTION OF THE INVENTION

In a preferred embodiment, the composition of the present invention comprises from 70 to 99 pbw, more preferably from 80 to 98 pbw and still more preferably from 90 to 98 pbw, of the thermoplastic resin and from 2 to 30 pbw, more preferably from 2 to 20 pbw and still more preferably from 2 to 10 pbw, of the appearance modifying additives.

In a more highly preferred embodiment, the composition comprises from 0.1 to 20 pbw, more preferably from 0.2 to 10 pbw and still more preferably from 0.5 to 8 pbw, of the metallic particles, from 0.1 to 20 pbw, more preferably from 0.2 to 10 pbw and still more preferably from 0.5 to 6 pbw, of the mineral particles and from 0.1 to 10 pbw, more preferably from 0.2 to 5 pbw and still more preferably from 0.5 to 3 pbw, of the fibers.

As used herein, the term "average" means the arithmetic average.

### Thermoplastic Resin

The thermoplastic resin component of the composition of the present invention comprises one or more of thermoplastic resins, preferably comprising one or more of aromatic carbonate resins, polyphenylene ether resins, vinyl aromatic graft copolymer resins, styrenic resins, polyester resins, polyamide resins, polyesteramide resins, polysulfone resins, polyimide resins, polyetherimide resins and rubber modified thermoplastic resins, such as, for example, vinyl aromatic graft copolymer resins. Polyphenylene ether resins, styrenic resins, polyester resins, polyamide resins, polyesteramide resins, polysulfone resins, polyimide resins, polyetherimide resins and rubber modified thermoplastic resins suitable for use as the thermoplastic resin component of the composition of the present invention are each known compounds whose preparation, properties and use as molding compounds are also known.

In a highly preferred embodiment, the thermoplastic resin comprises a rubber modified thermoplastic resin. The rubber modified thermoplastic resin of the preferred embodiment comprises a discontinuous elastomeric phase dispersed in a continuous rigid thermoplastic phase, wherein at least a portion of the rigid thermoplastic phase is chemically grafted to the elastomeric phase.

### (a) Elastomeric Phase

Suitable materials for use as the elastomeric phase are polymers those having a glass transition temperature (Tg) of less than or equal to 25°C, more preferably less than or equal to 0 °C, and even more preferably less than or equal to -30°C. As referred to herein, the T_{g} of a polymer is the T_{g} value of polymer as measured by differential scanning calorimetry (heating rate 20° C/ minute, with the T_{g} value being determined at the inflection point).

In a preferred embodiment, the elastomer phase comprises a polymer having first repeating units derived from one or more monoethylenically unsaturated monomers selected from conjugated diene monomers, non-conjugated diene monomers and (C₁-C₁₂) alkyl (meth)acrylate monomers and, optionally, having second repeating units derived from one or more monoethylenically unsaturated monomers selected from vinyl aromatic monomers and monoethylenically unsaturated nitrile monomers.

Suitable conjugated diene monomers include, e.g., 1,3-butadiene, isoprene, 1,3-heptadiene, methyl-1,3-pentadiene, 2,3-dimethylbutadiene, 2-ethyl-1,3-pentadiene, 1,3-hexadiene, 2, 4, hexadiene, dichlorobutadiene, bromobutadiene and dibromobutadiene as well as mixtures of conjugated diene monomers. In a preferred embodiment, the conjugated diene monomer is 1,3-butadiene.

Suitable non-conjugated diene monomers include, e.g., ethylidene norbomene, dicyclopentadiene, hexadiene or phenyl norbornene. As used herein, the term "(C₂-C₈)olefin monomers" means a compound having from 2 to 8 carbon atoms per molecule and having a single site of ethylenic unsaturation per molecule. Suitable (C₂-C₈)olefin monomers include, e.g., ethylene, propene, 1-butene, 1-pentene, heptene.

As used herein, the term "(C₁-C₁₂)alkyl" means a straight or branched alkyl substituent group having from 1 to 12 carbon atoms per group and includes, e.g., methyl, ethyl, n-butyl, sec-butyl, t-butyl, n-propyl, iso-propyl, pentyl, hexyl, heptyl, octyl, nonyl, decyl, undecyl and dodecyl, and the terminology "(meth)acrylate monomers" refers collectively to acrylate monomers and methacrylate monomers. Suitable (C₁-C₁₂)alkyl (meth)acrylate monomers include (C₁-C₁₂)alkyl acrylate monomers, e.g., ethyl acrylate, butyl acrylate, iso-pentyl acrylate, n-hexyl acrylate, 2-ethyl hexyl acrylate, and their (C₁-C₁₂)alkyl methacrylate analogs such as, e.g., methyl methacrylate, ethyl methacrylate, propyl methacrylate, iso-propyl methacrylate, butyl methacrylate, hexyl methacrylate, decyl methacrylate.

Suitable vinyl aromatic monomers include, e.g., styrene and substituted styrenes having one or more alkyl, alkoxyl, hydroxyl or halo substituent group attached to the aromatic ring, including, e.g., α-methyl styrene, p-methyl styrene, vinyl toluene, vinyl xylene, trimethyl styrene, butyl styrene, chlorostyrene, dichlorostyrene, bromostyrene, p-hydroxystyrene, methoxystyrene and vinyl-substituted condensed aromatic ring structures, such as, e.g., vinyl naphthalene, vinyl anthracene, as well as mixtures of vinyl aromatic monomers.

As used herein, the term "monoethylenically unsaturated nitrile monomer" means an acyclic compound that includes a single nitrile group and a single site of ethylenic unsaturation per molecule and includes, e.g., acrylonitrile, methacrylonitrile, α- chloro acrylonitrile.

The elastomeric phase may, optionally, include a minor amount, e.g., up to about 5 percent by weight ("wt%"), of repeating units derived from a polyethylenically unsaturated "crosslinking" monomer, e.g., butylene diacrylate, divinyl benzene, butene diol dimethacrylate, trimethylolpropane tri(meth)acrylate. As used herein, the term "polyethylenically unsaturated" means having two or more sites of ethylenic unsaturation per molecule.

The elastomeric phase may, particularly in those embodiments wherein the elastomeric phase has repeating units derived from alkyl (meth)acrylate monomers, include a minor amount, e.g., up to 5 wt% of repeating units derived from a polyethylenically unsaturated "graftlinking" monomer. Suitable graftlinking monomers include those monomers having a first site of ethylenic unsaturation with a reactivity similar to that of the monoethylenically unsaturated monomers from which the respective substrate or superstrate is derived and a second site of ethylenic unsaturation with a relative reactivity that is substantially different from that of the monoethylenically unsaturated monomers from which the elastomeric phase is derived so that the first site reacts during synthesis of the elastomeric phase and the second site is available for later reaction under different reaction conditions, e.g., during synthesis of the rigid thermoplastic phase. Suitable graftlinking monomers include, e.g., allyl methacrylate, diallyl maleate, triallyl cyanurate.

In a preferred embodiment, the elastomeric phase comprises from 60 to 100 wt% repeating units derived from one or more conjugated diene monomers and from 0 to 40 wt% repeating units derived from one or more monomers selected from vinyl aromatic monomers and monoethylenically unsaturated nitrile monomers, such as, e.g., a styrene-butadiene copolymer, an acrylonitrile-butadiene copolymer or a styrene-butadiene-acrylonitrile copolymer.

In an alternative preferred embodiment, the elastomeric phase comprises repeating units derived from one or more (C₁-C₁₂)alkyl acrylate monomers. In a more highly preferred embodiment, the rubbery polymeric substrate comprises from 40 to 95 wt% repeating units derived from one or more (C₁-C₁₂)alkyl acrylate monomers, more preferably from one or more monomers selected from ethyl acrylate, butyl acrylate and n-hexyl acrylate.

In a preferred embodiment, the elastomeric phase is made by aqueous emulsion polymerization in the presence of a free radical initiator, e.g., an azonitrile initiator, an organic peroxide initiator, a persulfate initiator or a redox initiator system, and, optionally, in the presence of a chain transfer agent, e.g., an alkyl mercaptan and coagulated to form particles of elastomeric phase material. In a preferred embodiment, the emulsion polymerized particles of elastomeric phase material have a weight average particle size of from about 50 to about 800 nm, more preferably, of from about 100 to about 500 nm, as measured by light transmission. The size of emulsion polymerized elastomeric particles may optionally be increased by mechanical or chemical agglomeration of the emulsion polymerized particles, according to known techniques.

### (b) Rigid Thermoplastic Phase

The rigid thermoplastic resin phase comprises one or more thermoplastic polymers and exhibits a T_{g} of greater than 25°C, preferably greater than or equal to 90°C and even more preferably greater than or equal to 100°C.

In a preferred embodiment, the rigid thermoplastic phase comprises a polymer or a mixture of two or more polymers each having repeating units derived from one or more monomers selected from the group consisting of (C₁-C₁₂)alkyl (meth)acrylate monomers, vinyl aromatic monomers and monoethylenically unsaturated nitrile monomers. Suitable (C₁-C₁₂)alkyl (meth)acrylate monomers, vinyl aromatic monomers and monoethylenically unsaturated nitrile monomers are those set forth above in the description of the elastomeric phase.

In a highly preferred embodiment, rigid thermoplastic phase comprises one or more vinyl aromatic polymers. Suitable vinyl aromatic polymers comprise at least 50 wt% repeating units derived from one or more vinyl aromatic monomers.

In a preferred embodiment, the rigid thermoplastic resin phase comprises a vinyl aromatic polymer having first repeating units derived from one or more vinyl aromatic monomers and having second repeating units derived from one or more monoethylenically unsaturated nitrile monomers.

The rigid thermoplastic phase is made according to known processes, e.g., mass polymerization, emulsion polymerization, suspension polymerization or combinations thereof, wherein a at least a portion of the rigid thermoplastic phase is chemically bonded, i.e., "grafted" to the elastomeric phase via reaction with unsaturated sites present in the elastomeric phase. The unsaturated sites in the elastomeric phase are provided, e.g., by residual unsaturated sites in repeating units derived from a conjugated diene or by residual unsaturated sites in repeating units derived from a graftlinking monomer.

In a preferred embodiment, at least a portion of the rigid thermoplastic phase is made by an aqueous emulsion or aqueous suspension polymerization reaction in the presence of elastomeric phase and a polymerization initiator system, e.g., a thermal or redox initiator system.

In an alternative preferred embodiment, at least a portion of the thermoplastic phase is made by a mass polymerization process, wherein particles of the material from which the elastomeric phase is to be formed is dissolved in a mixture of the monomers from which the rigid thermoplastic phase is to be formed and the monomers of the mixture are then polymerized to form the rubber modified thermoplastic resin.

In a preferred embodiment, the rigid phase comprises from 95wt% to 65 wt% , more preferably from 90 wt% to 70 wt% of structural units derived from a vinyl aromatic monomer, preferably styrene or α-methyl styrene and from 70 wt% to 40 wt% , more preferably from 65 wt% to 50 wt% of structural units derived from an ethylenically unsaturated nitrile monomer, preferably acrylonitrile.

The amount of grafting that takes place between the rigid thermoplastic phase and the elastomeric phase varies with the relative amount and composition of the elastomeric phase. In a preferred embodiment, from 10 to 90 wt%, preferably from 25 to 60 wt%, of the rigid thermoplastic phase is chemically grafted to the elastomeric phase and from 10 to 90 wt%, preferably from 40 to 75 wt% of the rigid thermoplastic phase remains "free", i.e., non-grafted.

The rigid thermoplastic phase of the rubber modified thermoplastic resin may be formed: (i) solely by polymerization carried out in the presence of the elastomeric phase or (ii) by addition of one or more separately polymerized rigid thermoplastic polymers to a rigid thermoplastic polymer that has been polymerized in the presence of the elastomeric phase.

Each of the polymers of the elastomeric phase and of the rigid thermoplastic resin phase of the rubber modified thermoplastic resin may, provided that the T_{g} limitation for the respective phase is satisfied, optionally include up to 10 wt% of third repeating units derived from one or more other copolymerizable monomers such as, e.g., monoethylenically unsaturated carboxylic acids such as, e.g., acrylic acid, methacrylic acid, itaconic acid, hydroxy(C₁-C₁₂)alkyl (meth)acrylate monomers such as, e.g., hydroxyethyl methacrylate; (C₄-C₁₂)cycloalkyl (meth)acrylate monomers such as e.g., cyclohexyl methacrylate; (meth)acrylamide monomers such as e.g., acrylamide and methacrylamide; maleimide monomers such as, e.g., N-alkyl maleimides, N-aryl maleimides, maleic anhydride, vinyl esters such as, e.g., vinyl acetate and vinyl propionate. As used herein, the term "(C₄₋C₁₂)cycloalkyl" means a cyclic alkyl substituent group having from 4 to 12 carbon atoms per group and the term "(meth)acrylamide" refers collectively to acrylamides and methacrylamides.

In a preferred embodiment, the rubber modified thermoplastic resin comprises an elastomeric phase comprising a polymer having repeating units derived from one or more conjugated diene monomers, and, optionally, further comprising repeating units derived from one or more monomers selected from vinyl aromatic monomers and monoethylenically unsaturated nitrile monomers, and the rigid thermoplastic phase comprises a polymer having repeating units derived from one or more monomers selected from vinyl aromatic monomers and monoethylenically unsaturated nitrile monomers.

In a highly preferred embodiment, the rubber modified thermoplastic resin comprises an elastomeric phase comprising a polymer having repeating units derived from butadiene or from butadiene and styrene and a rigid thermoplastic phase comprising a polymer having repeating units derived from derived from acrylonitrile and one or more of styrene and α-methyl styrene.

In a preferred embodiment, the rubber modified thermoplastic resin comprises from 5 wt% to 35 wt%, more preferably from 10 wt% to 20 wt%, of the elastomeric phase and from 95 wt% to 65 wt% %, more preferably from 90 wt% to 80 wt%, of the rigid phase.

### Colorants

In a preferred embodiment, the composition of the present invention further comprises one or more colorant for imparting a base color to the thermoplastic resin. Suitable colorants are those that are inert in the thermoplastic resin composition under the anticipated processing and end-use conditions and include, for example, organic pigments, such as for example, azo compounds, diaryl pyrrolopyrroles, aminoanthroquinones, inorganic pigments, such as, for example, mixed metal oxide pigments, organic dyes, such as, for example, anthraquinones, as well as mixtures thereof. Suitable colorants are known compound whose preparation and use in thermoplastic resin compositions are also known.

In a highly preferred embodiment, the composition comprises one or more colorants effective to impart a white, grey, brown, beige or black base color to the thermoplastic resin.

### Appearance-Modifying Additives

The appearance modifying additives of the composition of the present invention are selected to mimic the appearance of the metallic and mineral inclusions that occur in natural stone, such as, for example, granite.

The references herein to the appearance of articles molded from the composition of the present invention and to the colors and light reflecting properties of the appearance modifying additives of the composition of the present invention are to those exhibited under visual examination with "daylight" illumination, such as for example, that provided by sunlight or by a D65 (6500°K) light source.

Particles suitable for use as the metallic particle component of the composition of the present invention are particles that have an metallic exterior surface that reflects incident light and that are inert in the thermoplastic resin composition under the anticipated processing and end-use conditions and include, for example, aluminum, bronze, copper, copper-zinc, zinc, tin, nickel, gold, silver and stainless steel pigments, as well as mixtures thereof. Particles having a reflective metallic coating supported on a substrate are also suitable as the metallic particles. Such metallic particles exhibit a "sparkle" appearance, wherein the surfaces of the metallic particles reflect incident light as bright flashes of reflected light.

The metallic particles may comprise particles having various morphologies, such as, for example, spherical particles, irregularly shaped particles, flakes, that is, flattened particles, or a mixture thereof. In a preferred embodiment, the metallic particles comprises particles having an average "aspect ratio", that is, an average length-to diameter ratio, of less than about 1:1.2. In a highly preferred embodiment, at least a portion of the metallic particles are in the form of flakes.

In a preferred embodiment, the metallic particles have an average particle size of from 0.05 to 5 mm, more preferably from 0.05 to 4 mm. In a more highly preferred embodiment, the metallic particles comprise first metallic particles having an average particle size of from 0.05 to 0.2 mm, more preferably from 0.1 to 0.2 mm, and second metallic particles having an average particle size of from greater than 0.2 mm to 4 mm, more preferably from greater than 0.2 mm to 1 mm.

Metallic particles that break down during processing to form residues having particle sizes below the minimum particle sizes disclosed above are undesirable because such residues tend to become aligned in the direction of resin flow during molding to result in lines of such aligned particles that are visible as "flow lines" and "weld lines" in article molded from compositions containing such residues. In a preferred embodiment, the metallic particles do not break down during processing or cause visible flow lines or weld lines in articles molded from the composition of the present invention.

Fibers suitable for use as the fiber component of the composition of the present invention are those that are inert in the thermoplastic resin composition under the anticipated processing and end-use conditions and include, for example, cellulose ester fibers, acrylic fibers, polyester fibers, carbon fibers, each of which may, optionally, be coated, as well as mixtures thereof.

In a preferred embodiment, the fibers have an average diameter of from 0.1 to 10 mm, more preferably from 0.5 to 6 mm and even more preferably from 1 to 3 mm and an average aspect ratio of from 1:2 to 1:5, each as measured by microscopy. Processing tends to subject the fibers to mechanical shearing. Suitable fibers are either fibers that initially exhibit the desired aspect ratio and that do not mechanically break down during processing, or fibers initially having an aspect ratio that is higher than desired, but which undergo mechanical shearing during processing such that the fibers exhibit the desired aspect ratio after processing, but without flow line generating residue.

In a preferred embodiment, the fibers comprise opaque, colored fibers. More preferably, the fibers of the present composition comprise colored fibers that exhibit a color that is visually distinct from the base color of the thermoplastic resin.

In a highly preferred embodiment, the composition of the present invention comprises black fibers, white fibers or a mixture thereof.

In a preferred embodiment, the exterior surfaces of the fibers exhibit low reflectance of incident light compared to the above described metallic particles, that is, the fibers tend to scatter or absorb, rather than reflect, incident light.

Particles suitable for use as the mineral particle component of the composition of the present invention are those that are inert in the thermoplastic resin composition under the anticipated processing and end-use conditions.

The mineral particles may comprise particles of various morphologies, such as, for example, spherical particles, irregularly shaped particles, flakes, or a mixture thereof. In a preferred embodiment, the mineral particles comprises particles having an average aspect ratio of less than 1:1.2. In a more highly preferred embodiment, the mineral particles have an average particle size of from 0.1 to 4 mm, more preferably from 0.1 to 2 mm, as measured by microscopy.

In a preferred embodiment, the mineral particles do not break down during processing or cause visible flow lines or weld lines in articles molded from the composition of the present invention.

In a preferred embodiment, the mineral particles comprise opaque colored particles. More preferably, the colored mineral particles exhibit a color that is visually distinct from the base color.

In a very highly preferred embodiment, the composition of the present invention comprises black mineral particles, white mineral particles or a mixture thereof. Suitable black mineral particles include, for example, carbon blacks, spinel blacks, rutile blacks, iron blacks, ground thermoplastic resins, coated particles comprising a mineral black coating supported on a substrate and mixtures thereof. Suitable white mineral particles include, for example, titanium dioxide, zinc oxide, zinc sulfide, barium sulfate, coated particles comprising a mineral white coating supported on a substrate and mixtures thereof.

In a preferred embodiment, the exterior surfaces of the mineral particles exhibit low reflectance of incident light compared to the above described metallic particles, that is, the mineral particles tend to scatter or absorb, rather than reflect, incident light.

### Other Additives

The thermoplastic resin composition of the present invention may optionally also contain various conventional additives, such as: (1) antioxidants, such as, e.g., organophosphites , e.g., tris(nonylphenyl)phosphite, (2,4,6-tri-tert-butylphenyl)(2-butvl-2-ethyl-1,3-propanediol)phosphite, bis(2,4-di-t-butylphenyl)pentaerythritol diphosphite or distearyl pentaerythritol diphosphite, as well as alkylated monophenols, polyphenols, alkylated reaction products of polyphenols with dienes, such as, e.g., butylated reaction products of para-cresol and dicyclopentadiene, alkylated hydroquinones, hydroxylated thiodiphenyl ethers, alkylidene-bisphenols, benzyl compounds, acylaminophenols, esters of beta-(3,5-di-tert-butyl-4-hydroxyphenol)-propionic acid with monohydric or polyhydric alcohols, esters of beta-(5-tert-butyl-4-hydroxy-3-methylphenyl)-propionic acid with monohydric or polyhydric alcohols, esters of beta-(5-tert-butyl-4-hydroxy-3-methylphenyl) propionic acid with mono-or polyhydric alcohols, esters of thioalkyl or thioaryl compounds, such as, e.g., distearylthiopropionate, dilaurylthiopropionate, ditridecylthiodipropionate, amides of beta-(3,5-di-tert-butyl-4-hydroxyphenol)-propionic acid; (2) UV absorbers and light stabilizers such as, e.g., (i) 2-(2'-hydroxyphenyl)-benzotriazoles, 2-Hydroxy-benzophenones; (ii) esters of substituted and unsubstituted benzoic acids, (iii) acrylates, (iv) nickel compounds; (3) metal deactivators, such as, e.g., N,N'-diphenyloxalic acid diamide, 3-salicyloylamino-1,2,4-triazole; (4) peroxide scavengers, such as, e.g., (C₁₀₋C₂₀)alkyl esters of β-thiodipropionic acid, mercapto benzimidazole;(5) polyamide stabilizers; (6) basic co-stabilizers, such as, e.g., melamine, polyvinylpyrrolidone, triallyl cyanurate; urea derivatives, hydrazine derivatives; amines, polyamides, polyurethanes; (7) sterically hindered amines such as, e.g., triisopropanol amine or the reaction product of 2,4-dichloro-6-(4-morpholinyl)-1, 3, 5-triazine with a polymer of 1, 6-diamine, N, N'-Bis(-2, 2, 4, 6-tetramethyl-4-piperidenyl) hexane; (8) neutralizers such as magnesium stearate, magnesium oxide, zinc oxide, zinc stearate, hydrotalcite;(9) fillers and reinforcing agents, such as, e.g., silicates, TiO₂, glass fibers, carbon black, graphite, calcium carbonate, talc, mica; (9) other additives such as, e.g., lubricants such as , e.g., pentaerythritol tetrastearate, EBS wax, silicone fluids, plasticizers, optical brighteners, pigments, dyes, colorants, flameproofing agents; anti-static agents; blowing agents; (10) flame retardant additives such as, e.g., halogen-containing organic flame retardant compounds, organophosphate flame retardant compounds and borate flame retardant compounds.

The thermoplastic resin composition of the present invention is made, e.g., by melt mixing the components, e.g., in a two-roll mill, in a Banbury mixer or in a single screw or twin-screw extruder, mixing the components to produce a substantially homogeneous composition and optionally, reducing the composition so formed to particulate form, e.g., by pelletizing or grinding the composition.

In a preferred embodiment, all components of the composition other than the fibers and metallic particles are thoroughly mixed and the fibers and are then added to the other components and slightly mixed, mixed a sufficient amount to distribute the fibers and metallic particles throughout the composition, but not enough to form a homogeneous mixture, prior to reducing the material to particulate form. The inhomogeneity of the fiber and metallic particles distribution in the mixture greatly enhances the natural stone-like appearance of article molded from the composition.

The composition of the present invention can be molded into useful articles by a variety of means such as injection, extrusion, rotation, and blow molding and thermoforming to form articles such as, for example, automotive interior components, computer and business machine housings, electrical components, home appliances and media storage devices, such as, for example, audiovisual cassettes and disk drive components.

### Examples

A composition of the present invention was made by combining the following components in the relative amounts (in pbw) set forth below, in TABLE I:
- SAN:: Styrene-acrylonitrile copolymer comprising 72 wt% styrene and 28 wt% acrylonitrile;
- ABS:: Acrylonitrile-butadiene-styrene resin comprising 52 wt% butadiene rubber particles having an average particle size of about 300 nm and a styrene-acrylonitrile-copolymer (36 wt% styrene and 12 wt% acrylonitrile, based on 100 pbw of the acrylonitrile-butadiene-styrene resin) grafted to the butadiene particles;
- DHT-4A: Hydrotalcite additive (DHT-4A, Kyowa);
- ANTISTAT: Antistatic agent (Atmer 163, ICI);
- WAX1: EBS wax (Uniwax1760 EBS, Unichema);
- WAX2: Polyethylene wax (Cirea 316A, Allied Corp.);
- OIL: Silicone oil (GE Silicones);
- RDP: Resorcinol diphosphate (Reofos RDP, FMC Corp., Ltd)
- FIBER1: Black cellulose fiber having nominal diameter of 1 mm and nominal length of 4 (Garal, Towa Japan);
- FIBER2: White cellulose fiber having nominal diameter of 1 mm and nominal length of 4 mm (Garal white, Towa Japan);
- FLAKE: Metal flake having nominal particle size of 200 microns (Silchroma BG 15, Silberline Ltd);
- PIGMENT1: Metallic particles having nominal particle size of 65 microns (Silver 1E 004X004, Silberline Ltd);
- PIGMENT2: Black pigment (Black 7, Cabot Corporation);
- PIGMENT3: Yellow pigment (Mapicotan 10A, Columbian Carbon);
- PIGMENT4: Red pigment (Bayferrox 180MPL, Bayer AG); and
- TiO₂: Titanium dioxide (Tioxide, Europe SA).

**TABLE I**

| SAN | 74 |
|---|---|
| ABS | 26 |
| FIBER-1 | 1.0 |
| FIBER-2 | 2.5 |
| FLAKE | 3.0 |
| PIGMENT-1 | 0.8 |
| PIGMENT-2 | 0.0064 |
| PIGMENT-3 | 0.0044 |
| PIGMENT-4 | 0.0120 |
| TiO₂ | 0.32 |
| WAX-1 | 1.0 |
| WAX-2 | 0.5 |
| OIL | 0.7 |
| DHT-4A | 5.0 |
| RDP | 7.0 |
| ANTISTAT | 0.8 |

All materials other than the FIBER-1, FIBER-2, FLAKE and PIGMENT-1 were be fed into a Banbury- type mixer and well mixed. The FIBER-1, FIBER-2, FLAKE and PIGMENT-1 were then fed into the mixer and the contents of the mixer were mixed for an other 30 to 40 seconds. After this mixing, the contents of the mixer were fed to a mill (two roll), mixed for about 3 min. and then chopped into pellets in a dicer.

The pellets were injection molded to form sample plaques. The plaques had an appearance that was judged to be very similar to natural stone. The sample plaques were free of flow lines, because of the special selected materials used as fillers.

## Claims

1. A thermoplastic resin composition, comprising:
(a) a thermoplastic resin, and
(b) up to 30 parts by weight of appearance modifying additives dispersed in the resin, said additives comprising:
(i) at least 0.05 parts by weight of metallic particles having an average particle size of from 0.05 to 5 millimeters;
(ii) at least 0.05 parts by weight of fibers having an average diameter of from 0.1 to 10 millimeters and an average aspect ratio of from 1:2 to 1:10; and
(iii) at least 0.05 parts by weight of mineral particles having an average particle size of from 0.1 to 5 millimeters;
wherein said additives are present in relative amounts selected so that the molding compound imparts the appearance of natural stone to articles molded therefrom.

2. The composition of claim 1, wherein the thermoplastic resin is selected from aromatic carbonate resins, polyphenylene ether resins, vinyl aromatic graft copolymer resins, styrenic resins, polyester resins, polyamide resins, polyesteramide resins, polysulfone resins, polyimide resins, polyetherimide resins and rubber modified thermoplastic resins and mixtures thereof.

3. The composition of claim 2, wherein the thermoplastic resin comprises rubber modified thermoplastic resin.

4. The composition of claim 3, wherein rubber modified thermoplastic resin comprises an elastomeric phase comprising a polymer having repeating units derived from one or more conjugated diene monomers and a rigid thermoplastic phase at least a portion of which is chemically grafted to the elastomeric phase, wherein the rigid phase comprises a polymer having repeating units derived from one or more monomers selected from vinyl aromatic monomers and monoethylenically unsaturated nitrile monomers.

5. The composition of claim 1, wherein the metallic particles comprise first metallic particles having an average particle size of from 0.05 to 0.2 millimeters and second metallic particles having an average particle size of from greater than 0.2 millimeters to 4 millimeters.

6. The composition of claim 1, further comprising one or more colorants for imparting a base color to the thermoplastic resin.

7. The composition of claim 6, wherein the fibers comprise colored fibers that exhibit a color that is visually distinct from the base color.

8. The composition of claim 6, wherein mineral particles comprise colored particles that exhibit a color that that exhibit a color that is visually distinct from the base color.

9. The composition of claim 6, wherein the base color is black, white, grey brown or beige.

10. The composition of claim 9, wherein the fibers comprise black fibers, white fibers or a mixture thereof.

11. The composition of claim 9, wherein the mineral particles comprise black mineral particles, white mineral particles or a mixture thereof.

12. A thermoplastic resin composition, comprising:
(a) a thermoplastic resin matrix,
(b) one or more colorants for imparting a base color to the thermoplastic resin, wherein the base color is black, white, grey or beige, and
(c) up to 30 parts by weight of appearance-modifying additives, comprising:
(i) at least 0.05 parts by weight of metallic particles, comprising first metallic particles having an average particle size of from 0.05 to 0.2 millimeters and second metallic particles having an average particle size of from greater than 0.2 millimeters to 4 millimeters;
(ii) at least 0.05 parts by weight of fibers having an average diameter of from 0.1 to 10 millimeters and an average aspect ratio of from 1:2 to 1:10, wherein the fibers are opaque and each independently exhibit a color selected from black and white; and
(iii) at least 0.05 parts by weight of mineral particles having an average particle size of from 0.1 millimeters and 5 millimeters, wherein the mineral particles are opaque and each independently exhibit a color selected from black and white.

13. A method for molding a thermoplastic resin article having the appearance of natural stone, comprising mixing a thermoplastic resin with a colorant and at least 0.05 parts by weight of mineral particles having an average particle size of from 0.1 to 5 mm to form a substantially homogeneous mixture and then adding to the mixture at least 0.05 parts by weight of a fiber having an average diameter of from 0.1 to 10 millimeters and an average aspect ratio of from 1:2 to 1:10 and at least 0.05 parts by weight of metallic particles having an average particle size of from 0.05 to 5 millimeters and continuing the mixing to an extent effective to non-homogeneously disperse the fibers and metallic particles in the mixture so that articles molded from the composition exhibit the appearance of natural stone.

## Patentansprüche

1. Eine thermoplastische Harzzusammensetzung aufweisend
(a) ein thermoplastisches Harz, und
(b) bis zu 30 Gewichtsteile erscheinungsmodifizierende Additive, die im Harz dispergiert sind, wobei die Additive umfassen:
(i) wenigstens 0,05 Gewichtsteile von metallischen Partikeln mit einer mittleren Partikelgröße von 0,05 bis 5 Millimetern;
(ii) wenigstens 0,05 Gewichtsteile Fasern mit einem mittleren Durchmesser von 0,1 bis 10 Millimetern und einem Längenverhältnis (aspect ratio) von 1:2 bis 1:10; und
(iii) wenigstens 0,05 Gewichtsteile mineralische Partikel mit einer mittleren Partikelgröße von 0,1 bis 5 Millimetern;
wobei der relative Gehalt der Additive so gewählt ist, dass die Formmasse daraus geformten Gegenständen die Erscheinung von Naturstein verleiht.

2. Zusammensetzung nach Anspruch 1, **dadurch gekennzeichnet, dass** das thermoplastische Harz ausgewählt ist aus aromatischen Carbonatharzen, Polyphenylenetherharzen, vinylaromatischen Pfropfcopolymerharzen, Styrolharzen, Polyesterharzen, Polyamidharzen, Polyesteramidharzen, Polysulfonharzen, Polyimidharzen, Polyetherimidharzen und kautschukmodifizierten thermoplastischen Harzen und Mischungen davon.

3. Zusammensetzung nach Anspruch 2, **dadurch gekennzeichnet, dass** das thermoplastische Harz kautschukmodifiziertes thermoplastisches Harz umfasst.

4. Zusammensetzung nach Anspruch 3, **dadurch gekennzeichnet, dass** das kautschukmodifizierte thermoplastische Harz eine elastomere Phase umfasst, die ein Polymer aufweist, das Wiederholungseinheiten hat, die von einem oder mehreren konjugierten Dienmonomeren abgeleitet sind, und eine steife thermoplastische Phase, von der wenigstens ein Teil chemisch auf die elastomere Phase gepfropft ist, wobei die steife Phase ein Polymer umfasst, das Wiederholungseinheiten hat, die von einem oder mehreren Monomeren abgeleitet sind, ausgewählt aus vinylaromatischen Monomeren und monoethylenisch ungesättigten Nitrilmonomeren.

5. Zusammensetzung nach Anspruch 1, **dadurch gekennzeichnet, dass** die metallischen Partikel erste metallische Partikel umfassen, die eine mittlere Partikelgröße von 0,05 bis 0,2 Millimetern haben, und zweite metallische Partikel, die eine mittlere Partikelgröße von größer als 0,2 Millimeter bis 4 Millimeter haben.

6. Zusammensetzung nach Anspruch 1, **dadurch gekennzeichnet**, weiterhin umfassend ein oder mehrere Farbmittel, um dem thermoplastischen Harz eine Grundfarbe zu verleihen.

7. Zusammensetzung nach Anspruch 6, **dadurch gekennzeichnet, dass** die Fasern farbige Fasern umfassen, die eine Farbe zeigen, welche visuell von der Grundfarbe verschieden ist.

8. Zusammensetzung nach Anspruch 6, **dadurch gekennzeichnet, dass** mineralische Partikel farbige Partikel umfassen, die eine Farbe zeigen, welche visuell von der Grundfarbe verschieden ist.

9. Zusammensetzung nach Anspruch 6, **dadurch gekennzeichnet, dass** die Grundfarbe schwarz, weiß, grau, braun oder beige ist.

10. Zusammensetzung nach Anspruch 9, **dadurch gekennzeichnet, dass** die Fasern schwarze Fasern umfassen, weiße Fasern oder eine Mischung daraus.

11. Zusammensetzung nach Anspruch 9, **dadurch gekennzeichnet, dass** die mineralischen Partikel schwarze mineralische Partikel, weiße mineralische Partikel oder eine Mischung davon umfassen.

12. Thermoplastische Harzzusammensetzung aufweisend:
(a) eine thermoplastische Harzmatrix,
(b) ein oder mehrere Farbmittel, um dem thermoplastischen Harz eine Grundfarbe zu verleihen, wobei die Grundfarbe schwarz, weiß, grau oder beige ist, und
(c) bis zu 30 Gewichtsteile die Erscheinung modifizierende Additive, umfassen:
(i) wenigstens 0,05 Gewichtsteile metallischer Partikel, aufweisend erste metallische Partikel mit einer mittleren Partikelgröße von 0,05 bis 0,2 Millimetern und zweite metallische Partikel mit einer mittleren Partikelgröße von größer als 0,2 Millimeter bis 4 Millimeter;
(ii) wenigstens 0,05 Gewichtsteile Fasern mit einem mittleren Durchmesser von 0,1 bis 10 Millimeter und einem mittleren Längenverhältnis (average aspect ratio) von 1:2 bis 1:10, wobei die Fasern opak sind und jeweils unabhängig eine Farbe zeigen ausgewählt aus schwarz und weiß; und
(iii) wenigstens 0,05 Gewichtsteile mineralischer Partikel mit einer mittleren Partikelgröße von 0,1 Millimeter bis 5 Millimetern, wobei die mineralischen Partikel opak sind und jeweils unabhängig eine Farbe zeigen ausgewählt aus schwarz und weiß.

13. Verfahren zum Formen eines thermoplastischen Harzgegenstandes, der das Erscheinungsbild von Naturstein hat, bei welchem man ein thermoplastisches Harz mit einem Farbmittel und wenigstens 0,05 Gewichtsteilen mineralischer Partikel mischt, die eine mittlere Partikelgröße von 0,1 bis 5 Millimeter haben, um eine im Wesentlichen homogene Mischung zu bilden, und dann zu der Mischung wenigstens 0,05 Gewichtsteile Fasern hinzufügt, die einen mittleren Durchmesser von 0,1 bis 10 Millimeter haben und ein mittleres Längenverhältnis (average aspect ratio) von 1:2 bis 1:10, und wenigstens 0,05 Gewichtsteile metallischer Partikel mit einer mittleren Partikelgröße von 0,05 bis 5 Millimetern und das Mischen bis zu einem Grad fortsetzt, dass die Fasern und metallischen Partikel in der Mischung nicht homogen verteilt sind, so dass Gegenstände, die aus der Zusammensetzung geformt sind, das Erscheinungsbild von Naturstein zeigen.

## Revendications

1. Composition de résine thermoplastique, comprenant :
a) une résine thermoplastique,
b) et jusqu'à 30 parties en poids d'adjuvants de modification d'aspect dispersés dans la résine, lesquels adjuvants comprennent :
i) au moins 0,05 partie en poids de particules métalliques dont la taille moyenne vaut de 0,05 à 5 mm,
ii) au moins 0,05 partie en poids de fibres dont le diamètre moyen vaut de 0,1 à 10 mm et dont le rapport de forme moyen vaut de 1/2 à 1/10,
iii) et au moins 0,05 partie en poids de particules minérales dont la taille moyenne vaut de 0,1 à 5 mm,
ces adjuvants se trouvant présents en des proportions choisies de manière à ce que soit conféré l'aspect de pierre naturelle aux articles façonnés par moulage de la composition à mouler.

2. Composition conforme à la revendication 1, dans laquelle la résine thermoplastique est choisie parmi les résines polycarbonates aroamtiques, résines poly(phénylène éther), résines copolymères de greffage de vinyl-aromatique, résines styréniques, résines polyesters, résines polyamides, résines polyester-amides, résines polysulfones, résines polyimides, résines polyéther-imides et résines thermoplastiques modifiées par caoutchouc, ainsi que les mélanges de telles résines.

3. Composition conforme à la revendication 2, dans laquelle la résine thermoplastique comprend une résine thermoplastique modifiée par caoutchouc.

4. Composition conforme à la revendication 3, dans laquelle la résine thermoplastique modifiée par coutchouc comprend une phase élastomère comprenant un polymère qui comporte des motifs répétés dérivés d'un ou plusieurs monomères de type diène conjugué, et une phase thermoplastique rigide dont au moins une partie est chimiquement greffée à la phase élastomère, laquelle phase rigide comprend un polymère qui comporte des motifs répétés dérivés d'un ou plusieurs monomères choisis parmi les monomères vinyl-aromatiques et les monomères de type nitrile à insaturation mono-éthylénique

5. Composition conforme à la revendication 1, dans laquelle les particules métalliques comprennent des premières particules métalliques dont la taille moyenne vaut de 0,05 à 0,2 mm et des deuxièmes particules métalliques dont la taille moyenne vaut de plus de 0,2 mm à 4 mm.

6. Composition conforme à la revendication 1, comprenant en outre un ou plusieurs colorants qui confèrent une couleur de base à la résine thermoplastique.

7. Composition conforme à la revendication 6, dans laquelle les fibres comprennent des fibres colorées présentant une couleur visuellement distincte de la couleur de base.

8. Composition conforme à la revendication 6, dans laquelle les particules minérales comprennent des particules colorées présentant une couleur visuellement distincte de la couleur de base.

9. Composition conforme à la revendication 6, dans laquelle la couleur de base est le noir, le blanc, le gris, le brun ou le beige.

10. Composition conforme à la revendication 9, dans laquelle les fibres comprennent des fibres noires, des fibres blanches ou un mélange de telles fibres.

11. Composition conforme à la revendication 9, dans laquelle les particules minérales comprennent des particules noires, des particules blanches ou un mélange de telles particules.

12. Composition de résine thermoplastique, comprenant :
a) une résine thermoplastique,
b) un ou plusieurs colorants qui confèrent une couleur de base à la résine thermoplastique, laquelle couleur de base est le noir, le blanc, le gris, le brun ou le beige,
c) et jusqu'à 30 parties en poids d'adjuvants de modification d'aspect, lesquels adjuvants comprennent :
i) au moins 0,05 partie en poids de particules métalliques comprenant des premières particules métalliques dont la taille moyenne vaut de 0,05 à 0,2 mm et des deuxièmes particules métalliques dont la taille moyenne vaut de plus de 0,2 mm à 4 mm,
ii) au moins 0,05 partie en poids de fibres dont le diamètre moyen vaut de 0,1 à 10 mm et dont le rapport de forme moyen vaut de 1/2 à 1/10, lesquelles fibres sont opaques et présentent chacune, indépendamment, une couleur choisie parmi le blanc et le noir,
iii) et au moins 0,05 partie en poids de particules minérales dont la taille moyenne vaut de 0,1 à 5 mm, lesquelles particules minérales sont opaques et présentent chacune, indépendamment, une couleur choisie parmi le blanc et le noir.

13. Procédé de moulage d'un article en résine thermoplastique, présentant l'aspect de pierre naturelle, lequel procédé comporte le fait de mélanger une résine thermoplastique avec un colorant et avec au moins 0,05 partie en poids de particules minérales dont la taille moyenne vaut de 0,1 à 5 mm, pour en faire un mélange sensiblement homogène, le fait d'ajouter ensuite à ce mélange au moins 0,05 partie en poids de fibres dont le diamètre moyen vaut de 0,1 à 10 mm et dont le rapport de forme moyen vaut de 1/2 à 1/10, ainsi qu'au moins 0,05 partie en poids de particules métalliques dont la taille moyenne vaut de 0,05 à 5 mm, et le fait de poursuivre l'opération de mélange jusqu'à un point tel que les fibres et les particules métalliques soient dispersés de manière non homogène dans le mélange, de sorte que les articles obtenus par moulage de la composition présentent l'aspect de pierre naturelle.
